# EUROPEAN PATENT APPLICATION

(11) **EP 1 525 807 A1**
(43) Date of publication of application: **27.04.2005**
(21) Application number: 03024173.1
(22) Date of filing: 20.10.2003
(51) Int. Cl.: A23L 1/234, A23F 5/46

(54) **Sulfur compounds for enhancing coffee aroma and resultant products containing same**

(71) Applicant: NESTEC S.A., 1800 Vevey (CH)
(72) Inventor: Kerler, Josef, 1009 Pully (CH); Liardon, Rémy, 1010 Lausanne (CH); Poisson, Luigi, 1007 Lausanne (CH)
(74) Representative: Dixon, Sarah

(57) **Abstract**

Methods and uses of one or more aroma-providing compound(s) in an amount sufficient to increase the organoleptic properties of a coffee flavor provided in a food or beverage by the addition or incorporation of a soluble coffee powder therein, characterized in that the aroma-providing compound(s) replace(s) or reinforces flavors or aroma that were at least partially removed during preparation of the soluble coffee powder and comprise(s) at least one sulfur containing-alkane or sulfur-containing ketone. The aroma-providing compound(s) are added to the soluble coffee powder prior to its incorporation or addition to the food or beverage in an amount sufficient to increase the coffee flavor thereto. Food products and beverages containing one or more of these aroma-providing compounds same are also included.

## Description

### TECHNICAL FIELD

Methods and uses of one or more aroma-providing compound(s) including at least one sulfur containing-alkane or sulfur-containing ketone in an amount sufficient to increase the organoleptic properties of a coffee flavor provided in a food or beverage by the addition or incorporation of a soluble coffee powder therein, as well as food products and beverages containing the same.

### BACKGROUND ART

Aromas are an important part of many products since consumers associate certain aromas with certain products. If the product lacks the aroma associated with it, consumer perception of the product is adversely affected. This is particularly a problem in the field of soluble coffee powders, and beverages and food products containing coffee flavor or aroma, although it also exists in other fields. Soluble coffee powders, which are obtained from commercial processes involving extraction, concentration, and drying are usually substantially aroma-less. For this reason, it is conventional to recover coffee aromas which are given off during the processing of the soluble coffee powder and to reincorporate these aromas into concentrated coffee extract prior to drying into the soluble coffee powder.

The coffee aromas are typically recovered at several points during processing of the soluble coffee powder and most commonly during grinding of the roasted beans and by steam stripping of the coffee extract prior to concentration and drying of the soluble coffee solids.

The recovery of aroma from ground coffee is disclosed in U.S. Pat. No. 3,535,118. This patent discloses a process in which roast and ground coffee is placed in a column and maintained at about 40°C. The bed of coffee is then moistened by spraying water on it to assist in displacing aromas from the coffee particles. An inert gas, usually nitrogen, is heated to about 44°C and introduced into the column from beneath the bed. As the inert gas passes up through the bed, it strips the aromas from the coffee particles. The inert gas is then fed to a condenser which is operated at a temperature of about 5°C to condense water in the inert gas. The de-watered inert gas is ultimately fed to a cryogenic condenser to condense the aroma as a frost, which is then recovered.

Another process for recovering aroma from roast and ground coffee is described in international patent application WO 97/10721. In this process, the ground coffee is transported through an elongated mixing zone while being agitated. At the same time, an aqueous fluid is sprayed into the elongated mixing zone to moisten the ground coffee as the ground coffee is being transported and agitated. Aroma gases released by the moistened ground coffee in the elongated mixing zone are drawn off and are collected.

One of the problems perceived to arise with these processes is that they result in pre-wetting of the coffee grounds outside of the extraction cell or column. According to Sivetz, M and Desrosier N. W.; 1979; Coffee Technology, AVI Publishing Company, Inc., page 334, this practice is bad because it "causes staling of ground coffee in less than an hour, accompanied by a heavy, undesirable flavour [sic] and a loss in natural coffee volatiles." Sivetz and Desrosier strongly advocate that first wetting of the coffee grounds should occur in the extraction cell or column. Consequently recovery of aroma from ground coffee by pre-wetting is not common practice, despite ground coffee being a good source of aroma.

Further, not all components of the aroma obtained in a cup of freshly brewed coffee are captured during pre-wetting. Consequently, unless further aroma is captured later during the process, some aroma components are lost; components which would, if incorporated into instant coffee powder, improve the aroma of a beverage prepared from the instant coffee powder. Further, many of the conventional recovery techniques damage or alter the aroma components or the aroma compounds are degraded during storage of recovered aqueous aroma, which is often in contact with coffee extract or solids.

Various other patents disclose certain flavoring compositions or aroma extraction processes. U.S. Patent No. 3,540,889 discloses enhancing the flavor of soluble coffee by adding a known compound, methyl mercaptan, to coffee percolate prior to drying.

U.S. Patent No. 3,713,848 discloses processes for altering the flavor of foodstuffs by adding at least one branched-chain alkanethiol to alter the flavor of foodstuffs. The flavor provided is stated to be a roasted meat flavor, exemplified by rendered pork fat or chicken fat character, some of which also have the character of roasted onions.

U.S. Patent No. 3,773,524 discloses the use of certain α-ketothiols of the specified formula to alter the meat flavor and aroma of foodstuffs.

U.S. Patent No. 3,873,746 discloses a novel process for producing aromatized coffee using a synthetic coffee aroma composition by reacting methyl mercaptan with an excess of carbonyl compounds, providing further processing, and adding the reactant to a coffee product.

U.S. Patent No. 3,892,878 discloses altering the flavor of foodstuffs using an alkane dithiol, mercaptoalkanol, alkane dimercapto sulfide, or alkane hydroxy mercapto sulfide of the specified formula to provide primarily meat, liver, onion, and/or garlic flavors particularly for meat and poultry flavor compositions, as well as dairy and fruit flavors.

U.S. Patent No. 4,224,351 discloses ketone-thiols and their use as perfuming and odor-modifying agents in perfumes, and as flavoring and taste modifying agents, including enhancing the roasted and/or terrified notes of natural or instant coffee.

U.S. Patent No. 4,378,380 discloses combining known coffee flavorants including methyl mercaptan, a molar excess of carbonyl compounds, and furfuryl mercaptan with soluble coffee solids or coffee like solids powdered foodstuffs.

U.S. Patent No. 4,024,289 discloses enhancing the fruity flavors of foodstuffs using one of several α-oxy(oxo)mercaptans including 2-mercapto-3-pentanone.

JP Publication 2001-128620 teaches recovered flavors for producing coffee and tea drinks under aseptic conditions. The flavor ingredient is recovered when a juice, coffee, or tea drink is concentrated. The recovered flavor is then combined with one or more compounds listed in the publication, including methional, methylmercaptan, furfurylmercaptan, 3-mercapto-3-methylbutyl formate, 2-isobuty-3-methoxypyrazine, furaneol, sotolon, 2,3-butanedione, 2,3-pentanedione, damascenone, guaiacol, 4-vinylguaiacol, vanillin, (Z)-1,5-octadien-3-one, 4-methoxy-2-methyl-2-butanethiol, and 4-mercapto-4-methyl-2-pentanone, and used to the same type of tea or coffee drink. Coffee flavors including furfuryl thiol or 3-mercapto-3-methyl butyl formate are specifically disclosed.

International Publication No. WO 02/076239 teaches a process for stabilizing aroma-providing components such as coffee aroma against loss or degradation of desirable flavor or sensory aroma characteristics during storage. A stabilizing agent is included with the aroma-providing components to chemically interact with undesirable compounds to form a stable aroma-providing component.

Even in spite of various perfuming, flavoring, and aroma compounds, as well as various coffee products with improved aromas, there is still a need for recovered coffee aromas that can be provided in amounts sufficient to increase the organoleptic properties of a coffee flavor provided in a food or beverage.

### SUMMARY OF THE INVENTION

The invention relates to the use of one or more aroma-providing compound(s) in an amount sufficient to increase the organoleptic properties of a coffee flavor provided in a food or beverage, characterized in that the aroma-providing compound(s) provide(s) a portion of the flavors or aroma obtained from, *i.e.,* that exist in, freshly brewed coffee and comprise(s) at least one sulfur containing-alkane or sulfur-containing ketone.

In one embodiment, the aroma-providing compound includes a C₁-C₈ alkyl thiol that is optionally substituted by an OR group, where R is H or a C₁ alkyl group, a mercapto ketone having 1 to 8 carbon atoms that are linear or branched, or a dithioacetal of a C₁-C₄ aldehyde with SR₂ substituted, where R₂ is H or a C₁-C₄ alkyl group.

In another embodiment, the aroma-providing compound(s) include(s) bis(methyl thiol)-methane or -ethane, 1-methylthio-1-ethanethiol, or a combination thereof, and is present in an amount effective to impart a gaseous-garlic, sulfury odor character, to increase the freshly brewed coffee organoleptic properties, or both, of the food or beverage. In yet another embodiment, the aroma-providing compound includes a methoxy(-branched) -substituted alkyl thiol and is present in an amount effective to impart a blackcurrant, sulfury odor character, to increase the freshly brewed coffee organoleptic properties, or both, of the food or beverage. In a preferred embodiment, the aroma-providing compound further comprises a mercapto-butanone, -pentanone or -hexanone and is present in an amount effective to impart a fruity, catty-sulfury odor character, to increase the freshly brewed coffee organoleptic properties, or both, of the food or beverage. In one preferred embodiment, the aroma-providing compounds include the combination of one or more compounds of bis(methyl thiol)-methane or -ethane, 1-methylthio-1-ethanethiol, or a combination thereof, and a compound including a methoxy(-branched) -substituted alkyl thiol. In another preferred embodiment, the aroma-providing compounds include the combination of one or more compounds of bis(methyl thiol)-methane or -ethane, 1-methylthio-1-ethanethiol, or a combination thereof, and a compound including a methoxy(-branched) -substituted alkyl thiol, as well as one or more compounds including mercapto-butanone, -pentanone or -hexanone, or a combination thereof.

In another embodiment, one compound or more than one compound from each of these different types or categories can be included to form the aroma-providing compounds of the invention. In a preferred embodiment, the aroma-providing compound includes one or more or bis(methylthio)methane, 1-methylthio-1-ethanethiol, 4-methoxy-2-methylbutan-2-thiol, 3-mercapto-2-butanone, 2-mercapto-3-pentanone, 3-mercapto-2-pentanone, 3-mercapto-3-methylbutan-2-one, or 4-mercapto-4-methylpentan-2-one.

The invention also relates to methods for increasing the organoleptic properties of a coffee flavor provided in a food or beverage by providing a food or beverage and adding or incorporating one or more aroma-providing compounds to the food or beverage in an amount sufficient to increase the coffee flavor thereof, characterized in that the aroma-providing compounds provide(s) flavors or aroma that exist in freshly brewed coffee and wherein the one or more compounds comprise at least one sulfur containing-alkane or sulfur-containing ketone. The invention further relates to a food or beverage having enhanced organoleptic properties and obtainable by this method.

In one embodiment, the consumable component includes a food or beverage product incorporating a reconstituitable beverage, ready-to-drink beverage, alcoholic beverage, dough-based product, frozen confectionery product, chocolate or analogue thereof, cereal, or a spreadable dairy product or dairy substitute, or any mixture thereof.

The invention further relates to a food or beverage that includes a consumable component including a food or beverage product and one or more aroma-providing compound(s) in an amount sufficient to increase the organoleptic properties of coffee flavor in the food or beverage, characterized in that the aroma-providing compound(s) provide(s) flavors or aroma that exist in freshly brewed coffee and which comprise(s) at least one sulfur containing-alkane or sulfur-containing ketone. Each of the embodiments described above is equally applicable to the food or beverage and the method of the invention.

The invention also encompasses a coffee-flavoring agent that includes a carrier and one or more aroma-providing compound(s) in an amount sufficient to increase the organoleptic properties of coffee flavor, characterized in that the aroma-providing compound(s) provide(s) flavors or aroma that exist in freshly brewed coffee and which include(s) at least one sulfur containing-alkane or sulfur-containing ketone.

### DETAILED DESCRIPTION OF THE PREFERRED EMBODIMENTS

Certain advantageous sulfur-based compounds have now been identified for the first time in coffee, and these have been isolated from coffee products, and purified as needed to provide aroma-based compounds that can surprisingly be useful in preparing food products and beverages having an enhanced or reinforced coffee flavor. In particular, one or more aroma-providing compound(s) are used in an amount sufficient to increase the organoleptic properties of a coffee flavor provided in a food or beverage by the addition or incorporation of a soluble coffee powder therein. Preferably, the aroma-providing compound(s) replace(s) flavors or aroma that are at least partially removed or destroyed during conventional preparation of soluble coffee powders. Preferably, the aroma-providing compound(s) comprise(s) at least one sulfur containing-alkane or sulfur-containing ketone. The aroma-providing compound(s) are typically added to soluble coffee powder, and when so added the compound(s) is/are typically incorporated or added to the food or beverage in an amount sufficient to increase the coffee flavor thereof.

The aroma-providing compounds are isolated by any available technique, such as those well known to those of ordinary skill in the art including those described in U.S. Patent Nos. 6,455,093 and 6,592,922, each of which is incorporated herein by express reference thereto. These aroma-providing compounds are present and recovered from coffee grounds in fairly small amounts, so care should be taken in isolating the aroma-providing compound(s) to avoid contaminating them with other compounds that might dilute, modify, or react with the compound(s). Preferably, each aroma-providing compound isolated is at least substantially pure, more preferably they are completely pure except for trace impurities.

The aroma-providing compound typically includes at least one of the following: a C₁-C₈ alkyl thiol that is optionally substituted by an OR group, where R is H or a C₁ alkyl group, a mercapto ketone having 1 to 8 carbon atoms that are linear or branched, or a dithioacetal of a C₁-C₄ aldehyde with SR₂ substituted, where R₂ is H or a C₁-C₄ alkyl group, *i.e.,* including any combination thereof. One or more of these aroma-providing compounds can be used to provide an increased coffee flavor to a food product or beverage compared to conventional coffee solids or aromas added to food products or beverages that do not contain the one or more aroma-providing compounds presently discovered for such uses. In every embodiment, the one or more aroma-providing compound(s) are present in an amount sufficient to provide the desired flavor or aroma odor character to enhance the fresh brewed coffee characteristics or related flavor of the ultimate food product or beverage.

Depending on which flavor notes, *i.e.*, including aromas, are desired in the final product, different compounds among those noted above can be isolated and included. For example, when the aroma-providing compound(s) include(s) bis(methyl thiol) methane or ethane, or 1-methylthio-1-ethanethiol, or a combination thereof, it can impart a gaseous-garlic, sulfury odor character to the food or beverage. When the aroma-providing compound(s) include(s) one or more methoxy(-branched) -substituted alkyl thiols, it can impart a blackcurrant, sulfury odor character to the food or beverage. Finally, the aroma-providing compound(s) include(s) a mercapto butanone, pentanone or hexanone and is present in an amount effective to impart a fruity, catty, or sulfury odor character to the food or beverage.

A combination of aroma-providing compounds can be, and preferably is, used and provided to a food product or beverage. This is particularly useful where a sufficient amount of compound(s) having a gaseous, sulfury note is/are combined with a sufficient amount of compound(s) having a black currant, sulfury note. Preferably, the aroma-providing compounds include the combination of (A) bis(methyl thiol)- methane, -ethane, 1-methylthio-1-ethanethiol, or a combination thereof, along with (B) a methoxy(-branched) -substituted alkyl thiols, or optionally more than one. More preferably, the aroma-providing compounds include either one compound from category (A) and one or more compounds from category (B), or one compound from category (B) and one or more compounds from category (A). In one more preferred embodiment, the aroma-providing compounds include one compound from category (A) and one compound from category (B).

It is also preferable, when a fruity, catty, or sulfury odor is desired, to include one or more compounds having such a note with one or more other aroma-providing compound(s) of the invention. Preferably, the aroma-providing compounds include the combination of one or more compounds from each of category (A), category (B), and from category (C) that includes a mercapto-butanone, -pentanone, -hexanone, or any combination thereof. It is also preferable to select aroma-providing compound(s) from the following group to enhance coffee flavor according to the invention: bis(methylthio)methane, 1-methylthio-1-ethanethiol, 4-methoxy-2-methylbutan-2-thiol, 3-mercapto-2-butanone, 2-mercapto-3-pentanone, 3-mercapto-2-pentanone, 3-mercapto-3-methylbutan-2-one, or 4-mercapto-4-methylpentan-2-one, or any combination thereof.

The preferred aroma-providing compounds can be selected from those set forth in the table below:

**Table:**

| New Sulfur-Based Aroma-Providing Compounds | | |
|---|---|---|
| **No.** | **Aroma compound** | **Odor quality** |
| | **group A: gaseous-garlic, sulfury odor** | |
| 1 | bis(methylthio)methane | Garlic, sulfury |
| 2 | 1-methylthio-1-ethanethiol group | Garlic, sulfury |

| | **B: blackcurrant, fruity odor** | |
|---|---|---|
| 3 | 4-methoxy-2-methylbutan-2-thiol group | Black currant |

| | **C: fruity, catty, sulfury odor** | |
|---|---|---|
| 4 | 3-mercapto-2-butanone | Catty, onion, sulfury |
| 5 | 2-mercapto-3-pentanone | Catty, sulfury |
| 6 | 3-mercapto-2-pentanone | Catty, sulfury |
| 7 | 3-mercapto-3-methylbutan-2-one | Fruity, catty, sulfury |
| 8 | 4-mercapto-4-methylpentan-2-one | Fruity, catty, sulfury |
| Group A tends to impact on the fresh, roasty flavor and coffee character | | |
| Groups B and C tend to impact on the fresh, fruity, roasty coffee character. | | |

The identity of these compounds after extraction, such as from coffee solids, can be confirmed by those of ordinary skill in the art using, *e.g.*, mass spectra, gas chromatography, gas chromatography/olfactometry, odor quality, RI indices, cochromatography of references, or the like, or combinations thereof.

The aroma-providing compounds of the invention can be used to prepare any type of food product or beverage available to those of ordinary skill in the art. This is accomplished by combining a consumable component, such as a food or beverage product, with a sufficient amount of aroma-providing compound(s) including at least one sulfur containing-alkane or sulfur-containing ketone to increase the coffee flavor of the food product or beverage, or combination thereof. A "consumable component" is typically a food or beverage product, or a combination thereof. The consumable component can include, for example, a reconstituitable beverage, ready-to-drink beverage, alcoholic beverage, dough-based product, frozen confectionery product, chocolate or analogue thereof, cereal, or a spreadable dairy product or dairy substitute, or any mixture thereof.

Exemplary beverages that can be prepared according to the invention include any coffee-flavored drinks or drinks having a coffee aroma or flavor, such as ready-to-drink coffee beverages, powdered coffee beverages, coffee-flavored liquors, coffee-flavored wine coolers or mixed drinks, fresh milk, reconstituitable milk, or other types of milks with coffee flavor, carbonated soft drinks having coffee flavor, or the like; or any combination thereof.

Exemplary food products that can be prepared according to the invention to have an increased coffee flavor include: desserts, such as dough-based products including cakes, cookies, brownies, and coated or uncoated sugar wafers; frozen confectionery products including water ices and ice creams; chocolates, chocolate analogues, or other non-frozen confectionery products, or the like; cereal; grits; biscuits; bagels; muffins; biscotti; pastas; spreadable foods or other dairy or non-dairy materials, such as cheese, cream cheese, yogurt, butter, margarine, nut-based spreads including peanut butter, and the like; and any combination thereof. It is also possible to prepare pet food or beverage products, including pet chew toys having an edible coating including the aroma-providing compound(s). In one embodiment, the food or beverage product is a coffee or coffee-related product, *e.g.*, fresh brewed coffee, soluble coffee powders, 3-in-1 powdered coffees including powdered milk and creamer, iced coffee, espresso, or the like.

The sufficient amount of aroma-providing compound(s) will vary depending on at least the type of compound(s) included, the strength of coffee flavor desired, the strength of flavor already present from other coffee-flavored components, the amount of food or beverage product present, and the type of food or beverage being prepared, as will be readily apparent to those of ordinary skill in the art. Also, cost considerations, as well as processing, transport, and storage conditions may also play a factor in the sufficient amount of aroma-providing compound(s) required. Suitable amounts of aroma-providing compound(s) can vary from about 0.00002 ppb to about 2 ppm of a typical food product or beverage, preferably below about 1 ppm. An exemplary amount is about 0.001 ppb to 0.1 ppm of the food product or beverage. By way of example for one of the preferred embodiments, food or beverage product can preferably include about 0.00001 to 0.001 ppb of 4-methoxy-2-methylbutan-2-thiol, although other higher or lower amounts may provide a suitable freshly brewed coffee organoleptic character. The aroma-providing compounds of the invention vary in potency by factors as high as about 10,000, so varying amounts within the above ranges may be used and are readily determinable by those of ordinary skill in the art.

It is known that aromas derived from coffee itself are unstable, and various efforts including some conventional methods are described in this application. Since the aroma-providing compound(s) of the invention can be synthesized or extracted from coffee itself, they can then surprisingly and unexpectedly be provided into a food or beverage, or even a coffee beverage itself, in an amount greater than that found naturally in coffee. This provides the ability to approximately double, triple, or quadruple the concentration of the aroma-providing compounds of the invention compared to freshly brewed natural coffee, when combined into a food or beverage product. Thus, as a portion of the aroma destabilizes over time, there is a sufficient amount remaining in the food or beverage product to provide at least the equivalent amount of compounds found in a fresh brewed coffee aroma or flavor so that a suitable organoleptic coffee character can still be obtained. Other higher amounts of aroma-providing compounds of the invention can be used, as well.

The aroma-providing components can be provided in any available form available to those of ordinary skill in the art. For example, they can be extracted from coffee itself or synthetically manufactured. Any commercially available method may be used to ensure suitable stability of the aroma-providing components through to combining them into a food or beverage product, and preferably in a form suitable for a storage stable food or beverage product where the aroma-providing components can maintain suitable stability over the expected shelf-life of the food or beverage products. One particularly suitable technique includes encapsulation of the aroma providing compound(s), either separately or in any combination. Encapsulation can be accomplished by any suitable technology available to those of ordinary skill in the art, *e.g.*, spray-drying or extrusion, or a combination thereof.

The aroma-providing components will typically be provided with one or more carriers to facilitate manipulation, stability, as well as combination with the selected food or beverage product. A particularly suitable carrier includes one or more carbohydrate materials, preferably including a carbohydrate polymer. As an example, maltodextrins such as 33DE corn syrup solids (Glucidex IT33) with or without 5% MCT oil can act as a suitable carrier for the aroma-providing compounds or other such labile substances.

It should also be understood that a flavoring adjuvant such as a flavoring agent or flavor intensifier including one or more conventional components can be used with the aroma-providing compound(s) of the invention. Examples include saturated or unsaturated fatty acids, and amino acids; alcohols, such as primary and secondary alcohols; esters; carbonyl compounds including aldehydes and ketones; lactones; cyclic organic materials including benzene derivatives such as guaiacols; alicyclics; heterocyclics such as furans, pyridines, pyrazines, and the like; other sulfur-containing materials including conventional types of thiazoles, thiols, sulfides, disulfides, and the like; flavor potentiators, such as monosodium glutamate, guanylates, inosinates; natural and synthetic flavorants, such as vanillin, natural gums, and the like; spices; herbs; essential oils and extracts including anise and oils thereof, alkanet root extract, bay leaves, capsicum extract, and the like; and any combinations thereof.

The specific flavoring adjuvant can be solid, liquid, or both, depending on the desired ultimate amounts and form of the food or beverage product to which the aroma compounds of the invention will be provided. In one preferred embodiment, any flavoring adjuvant and aroma providing compounds can preferably be dispersed, admixed, or the like to provide at least a substantially homogeneous medium. The selection of a flavoring adjuvant, if any, and the quantity thereof, will depend on the precise organoleptic character desired in the final food or beverage product having the coffee aroma providing compound(s) according to the invention.

The invention also relates to packaging for such consumable products. The consumable product, such as a food or beverage product, or a combination thereof, can be prepared and provided with the aroma-providing compound(s) and consumable component already combined or in separate containers. For example, where the consumable component is a solid or powder and the aroma-providing compound(s) is/are in liquid, pasty, or oily, *i.e.*, flowable form, it might be desirable to keep them apart but preferably adjacent. In one embodiment, the aroma-providing compound(s) and consumable component are provided in adjacent compartments separated by a removable barrier. In one preferred embodiment, the removable barrier is breakable in place to permit combination of the aroma-providing compound(s) and the consumable component. In another embodiment, at least a portion of one is in a solid or powdered form and at least a portion of the other is liquid to facilitate combination thereof. The barrier can also simply be removable or openable to permit the separated portions to combine, either with or without additional assistance. Gravity or shaking may also be employed to facilitate combination of separated components. For example, the liquid portion can be in a compartment above the solid or powdered portion so that the liquid can fall and mix with the solid or powdered portion after the barrier between them is eliminated. In the case of a permanent barrier, one portion can be added into the compartment of the other by any suitable mechanism such as a spoon, a feed line optionally connected to a pump (*e.g.*, an atomizer to spray liquid over the solid or powdered component), or the like. Any conventional permanent or removable barrier system can be used that is available to those of ordinary skill in the art. This separation of the aroma-providing compound(s) from the consumable food or beverage product until just prior to use, when implemented, can advantageously provide a significantly longer shelf-life and/or provide significantly stronger organoleptic characteristics of freshly brewed coffee. Without being bound by theory, it is believe this is facilitated by minimizing or avoiding the instability that can arise when the aroma-providing compound(s) are in longer-term contact with the consumable component.

In the case of a "food or beverage product," as used herein, the consumable component is an edible component that can include any food or edible substance suitable for consumption. By "edible" it is meant anything suitable for digestive consumption including, *e.g.*, chewing gums and the like in addition to conventional foods that are eaten for nourishment or pleasure, or both. These products usually have, but need not have, nutritional value. Preferably, these food or beverage products include anything categorized as generally recognized as safe ("GRAS") by the FDA. The edible component can be in the form of a liquid, powder, or solid, or a combination thereof such as a spread or paste or with distinct portions having these separate phase forms. In the case of a food or beverage product, the consumable product of the invention can be available as a ready-to-use, ready-to-eat or -drink, ready-to-bake, or raw ingredient that requires further action such as cooking or mixing with other edible substances before use by a consumer.

The term "substantially pure," as used herein with respect to the isolated aroma-providing compounds, typically means greater than 50 percent by weight, preferably at least about 90 percent, more preferably at least about 95 weight percent, is the isolated compound desired. In a preferred embodiment, substantially pure means at least about 99 weight percent. "Completely pure" can refer to amounts more pure than about 99 weight percent, for example, at least about 99.5 weight percent or at least about 99.9 weight percent of the desired isolate.

The term "about," as used herein, should generally be understood to refer to both numbers in a range of numerals. Moreover, all numerical ranges herein should be understood to include each whole integer within the range.

Although preferred embodiments of the invention have been described in the foregoing description, it will be understood that the invention is not limited to the specific embodiments disclosed herein but is capable of numerous modifications by one of ordinary skill in the art. It will be understood that the materials used and the chemical details may be slightly different or modified from the descriptions herein without departing from the methods and compositions disclosed and taught by the present invention.

## Claims

1. Use of one or more aroma-providing compound(s) in an amount sufficient to increase the organoleptic properties of a coffee flavor provided in a food or beverage, **characterized in that** the aroma-providing compound(s) provide(s) a portion of the flavors or aroma that exist in freshly brewed coffee and comprise(s) at least one sulfur containing-alkane or sulfur-containing ketone.

2. Use according to claim 1, **characterized in that** the aroma-providing compound(s) comprise(s) a C₁-C₈ alkyl thiol that is optionally substituted by an OR group, where R is H or a C₁ alkyl group, a mercapto ketone having 1 to 8 carbon atoms that are linear or branched, or a dithioacetal of a C₁-C₄ aldehyde with SR₂ substituted, where R₂ is H or a C₁-C₄ alkyl group.

3. Use according to claim 2, **characterized in that** the aroma-providing compound(s) comprise(s) bis(methyl thiol)-methane or -ethane, 1-methylthio-1-ethanethiol, or a combination thereof, and is present in an amount effective to impart a gaseous-garlic, sulfury odor character, to increase the freshly brewed coffee organoleptic properties, or both, of the food or beverage.

4. Use according to claim 3, **characterized in that** the aroma-providing compound(s) comprise(s) a methoxy(-branched)-substituted alkyl thiol and is present in an amount effective to impart a blackcurrant, sulfury odor character, to increase the freshly brewed coffee organoleptic properties, or both, of the food or beverage.

5. Use according to claim 3 or 4, **characterized in that** the aroma-providing compound(s) further comprise(s) a mercapto-butanone, -pentanone or -hexanone and is present in an amount effective to impart a fruity, catty-sulfury odor character, to increase the freshly brewed coffee organoleptic properties, or both, of the food or beverage.

6. Use according to claim 5, **characterized in that** the aroma-providing compounds include the combination of one or more compounds from claim 3 and one compound from claim 4.

7. Use according to claim 5, **characterized in that** the aroma-providing compounds include the combination of one or more compounds from claim 3, one compound from claim 4, and one or more compounds from claim 5.

8. Use according to claim 1, **characterized in that** the aroma-providing compound(s) comprise(s) one or more or bis(methylthio)methane, 1-methylthio-1-ethanethiol, 4-methoxy-2-methylbutan-2-thiol, 3-mercapto-2-butanone, 2-mercapto-3-pentanone, 3-mercapto-2-pentanone, 3-mercapto-3-methylbutan-2-one, or 4-mercapto-4-methylpentan-2-one.

9. A method for increasing the organoleptic properties of a coffee flavor provided in a food or beverage which comprises providing a food or beverage and adding or incorporating one or more aroma-providing compounds to the food or beverage in an amount sufficient to increase the coffee flavor thereof, **characterized in that** the aroma-providing compound(s) provide(s) flavors or aroma that exist in freshly brewed coffee and wherein the one or more compounds comprise at least one sulfur containing-alkane or sulfur-containing ketone.

10. A food or beverage having enhanced organoleptic properties and obtainable by the method of claim 9.

11. A food or beverage that includes a consumable component and one or more aroma-providing compound(s) in an amount sufficient to increase the organoleptic properties of coffee flavor in the food or beverage, **characterized in that** the aroma-providing compound(s) provide(s) flavors or aroma that exist in freshly brewed coffee and comprise(s) at least one sulfur containing-alkane or sulfur-containing ketone.

12. The food or beverage according to claim 10 or 11, **characterized in that** the aroma-providing compound is a C₁-C₈ alkyl thiol that is optionally substituted by an OR group, where R is H, a C₁-alkyl group, a mercapto ketone having 1 to 8 carbon atoms that are linear or branched, or a dithioacetal of a C₁-C₄ aldehyde with SR₂ substituted, where R₂ is H or a C₁-C₄ alkyl group.

13. The food or beverage according to claim 12, **characterized in that** the aroma-providing compound is bis(methyl thiol)-methane or -ethane, 1-methylthio-1-ethanethiol, or a combination thereof, and is present in an amount effective to impart a gaseous-garlic, sulfury odor character, to increase the freshly brewed coffee organoleptic properties, or both, of the food or beverage.

14. The food or beverage according to claim 13, **characterized in that** the aroma-providing compound is a methoxy(-branched)-substituted alkyl thiol and is present in an amount effective to impart a blackcurrant, sulfury odor character, to increase the freshly brewed coffee organoleptic properties, or both, of the food or beverage.

15. The food or beverage according to claim 12 or 13, **characterized in that** the aroma-providing compound is a mercapto-butanone, -pentanone or -hexanone and is present in an amount effective to impart a fruity, catty-sulfury odor character, to increase the freshly brewed coffee organoleptic properties, or both, of the food or beverage.

16. The food or beverage according to claim 15, **characterized in that** the aroma-providing compounds include the combination of one or more compound from claim 13 and one compound from claim 14.

17. The food or beverage according to claim 15, **characterized in that** the aroma-providing compounds include the combination of one or more compounds from claim 13, one compound from claim 14, and one or more compounds from claim 15.

18. The food or beverage according to claim 10 or 11, **characterized in that** the aroma-providing compound is one or more of bis(methylthio)methane, 1-methylthio-1-ethanethiol, 4-methoxy-2-methylbutan-2-thiol, 3-mercapto-2-butanone, 2-mercapto-3-pentanone, 3-mercapto-2-pentanone, 3-mercapto-3-methylbutan-2-one, or 4-mercapto-4-methylpentan-2-one.

19. The food or beverage according to claim 10 or 11, **characterized in that** the consumable component comprises a reconstituitable beverage, ready-to-drink beverage, alcoholic beverage, dough-based product, frozen confectionery product, chocolate or analogue thereof, cereal, or a spreadable dairy product or dairy substitute, or any mixture thereof.

20. A coffee-flavoring agent that includes a carrier and one or more aroma-providing compound(s) in an amount sufficient to increase the organoleptic properties of coffee flavor, **characterized in that** the aroma-providing compound(s) provide(s) flavors or aroma that exist in freshly brewed coffee and comprise(s) at least one sulfur containing-alkane or sulfur-containing ketone.
